# EUROPÄISCHE PATENTANMELDUNG

(11) **EP 0 809 022 A1**
(43) Veröffentlichungstag der Anmeldung: **26.11.1997**
(21) Anmeldenummer: 97106722.8
(22) Anmeldetag: 23.04.1997
(51) Int. Cl.: F03D 9/00, F03D 11/04

(54) **Windkraftanlage**

(30) Priorität: 23.04.1996 DE 29607243 U; 01.03.1997 DE 29703724 U
(71) Anmelder: Schönfeldt, Günter, 38899 Stiege (DE); Raschka, Jost, 78224 Singen (DE)
(72) Erfinder: Schönfeldt, Günter, 38899 Stiege (DE); Raschka, Jost, 78224 Singen (DE)
(74) Vertreter: Hiebsch, Gerhard F., Dipl.-Ing.

(57) **Zusammenfassung**

Windkraftanlage mit einem Tragmast (12) für einen mit einem Generator treibend verbundenen Rotor (16) und von dem Generator ausgehenden Zuleitungen zu einer Netzeinspeisung (27), wobei an den Tragmast (12) mit der Netzeinspeisung (27) verbundene photovoltaische Elemente oder Solarmodule (30) oder Gruppen von Solarmodulen angefügt sind, die mittels einer motorisch betriebenen Positioniervorrichtung (44 bis 54) als Reaktion auf eine Intensität einfallenden Sonnenlichts in eine Richtung maximalen Lichteinfalls ausrichtbar ausgebildet sind.

## Beschreibung

Die Erfindung betrifft eine Windkraftanlage mit einem Tragmast für einen mit einem Generator treibend verbundenen Rotor und mit von dem Generator ausgehenden Zuleitungen zu einer Netzeinspeisung. Dieser ist zum Generator hin eine Netzeinspeiseelektronik vorgeschaltet.

Derartige Windkraftanlagen sind zur Erzeugung von -- zu Kernkraft oder fossile Brennstoffe auswertenden Kraftwerken -- alternativer Energie seit längerem bekannt.

Ebenfalls zum Stande der Technik zählen sogenannte photovoltaische Elemente, die beispielsweise nach DE-OS 34 27 574 auf einer zwischen Stützen od. dgl. Tragelementen aufgespannten Dachhaut oder einem entsprechenden flexiblen Tragwerk als Schicht oder als zueinander bewegbare Siliziumkristalle vorgesehen sind. Photovoltaische Elemente weisen einen mehrschichtigen Aufbau auf; eine Sperrschicht trennt Systeme aus Halbleiter/Halbleiter, Halbleiter/Elektrolyt, Halbleiter/Metall oder Metall/Elektrolyt. In der Sperrschicht oder in ihrer unmittelbaren Umgebung entsteht ein sogenannter Photoeffekt; durch Lichteinfall erzeugte, aus der Umgebung in dieser Sperrschicht eindiffundierte oder in der Sperrschicht entstandene Ladungsträgerpaare (Excitonen) werden im elektrischen Feld der Sperrschicht getrennt, wodurch eine nutzbare Spannung entsteht. Beispielsweise kann einer -- zwischen einer oberen negativ dotierten (etwa Silizium mit Phosphor-Atomen) und einer unteren (Bor-Atome) positiv dotierten Schicht aufgebauten -- elektrischen Sperre über Metallkontakte unmittelbar Gleichstrom entnommen werden, den man dann durch Inverter an das Stromnetz anpassen kann.

Allerdings hängt die Stromausbeute und damit der Wirkungsgrad eines photovoltaischen Elements von dem Einfallswinkel des Sonnenlichts bezogen auf die Elementoberfläche ab; so verändert sich üblicherweise der von einer Photovoltaikzelle abgegebene Strom mit dem Kosinus des Einfallswinkels.

Gerade in nordeuropäischen Breiten mit eher moderaten Intensitäten einfallenden Lichts ist es daher entscheidend für eine gute Stromausbeute, stets eine möglichst gute Positionierung der Photovoltaikzellen relativ zum Lichteinfall vorzunehmen.

Gerade aus dem Stand der Technik bekannte Tragelemente oder Photovoltaikanordnungen genügen jedoch in der Regel diesen Anforderungen nicht, da es sich dabei um statische und üblicherweise auch großflächige, unbewegbare Vorrichtungen handelt. Hier tritt dann das Problem auf, daß es nicht nur tageszeitabhängig (d.h. durch den Sonnenstand bedingt) zu beträchtlichen Änderungen der Strahlungsintensität auf eine jeweilige Elementoberfläche kommt; darüber hinaus ist obendrein die Veränderung eines jeweiligen Sonnenstandes abhängig von der Jahreszeit problematisch.

Als weiteres Problem aus dem Stand der Technik ergibt sich, daß üblicherweise Solarzellenanordnungen durch ihre bereits physikalisch notwendige, wirksame Oberfläche beträchtlichen Platz- und Befestigungsbedarf besitzen, welcher sich oftmals nur mit großen technischen und architektonischen Problemen lösen läßt.

Aufgabe der Erfindung ist es daher, eine gattungsgemäße Windkraftanlage dahingehend zu verbessern, daß nicht nur die Stromausbeute einer solchen Anlage verbessert werden kann; darüber hinaus soll ein Weg zur platzsparenden und ökonomischen Positionierung von Photovoltaikzellen gefunden werden.

Zur Lösung dieser Aufgabe führt die Lehre des unabhängigen Anspruches, die Unteransprüche geben günstige Weiterbildungen an.

Erfindungsgemäß sind an den Tragmast photovoltaische Elemente oder Solarmodule -- oder Gruppen von Solarmodulen --angefügt, deren Anschlußleitungen mit der vorhandenen Netzeinspeiseelektronik verbunden sind, und die in der in Anspruch 1 angegebenen Weise positionierbar sind.

Bevorzugt ist dabei zum Anpassen der von den Solarmodulen erzeugten elektrischen Signale an die Netzeinspeisung den photovoltaischen Elementen oder Solarmodulen eine geeignet eingerichtete und dimensionierte Wandlerelektronik zugeordnet.

Vorteilhafterweise ist der gesamte Umfang des Tragmastes mit den photovoltaischen Elementen oder Solarmodulen belegt, und der Bereich des Tragmastes mit den photovoltaischen Elementen oder Solarmodulen endet nach oben hin etwa an einem Konstruktionskreis, der von den Rotorblattspitzen bestimmt ist.

Auch hat es sich als günstig erwiesen, die photovoltaischen Elemente oder Solarmodule durch Zwischenelemente mit dem Tragmast zu verbinden, um diese einzeln oder in Gruppen verstellbar zu gestalten; zum Verstellen der photovoltaischen Elemente oder Solarmodule gegenüber dem Tragmast können zudem weiterbildungsgemäß lichteinfallabhängige Sensoren als Steuerelemente vorgesehen sein.

Dank dieser Erfindung wird nicht nur die Verfügbarkeit der Energiegewinnung an den Standorten von Windkraftanlagen durch die beschriebene Verwendung von Photovoltaik-Zellen an den Türmen oder Tragmasten beträchtlich erhöht, darüber hinaus ist durch die automatisierte Positionierung bzw. Nachführung der Zellen entsprechend einem momentanen Sonnenstand stets der leistungsbestimmende Einfallswinkel des Lichts auf die Voltaikzellen optimiert.

Gesondert Schutz wird für eine Ausbildung der Solarzellen mit gekrümmtem Querschnitt beansprucht, wodurch die Solarzellen an den Umfang des Tragmastes angepaßt sein können.

Im übrigen kann die photovoltaisch belegte Oberfläche des Tragmastes in Teilflächen zerlegt werden, welche direkt mit einem zentralen Rechner verbunden sind. Eine Spannungsmessung aller Zellbereiche, eine Sortierung in Bereiche gleicher Spannung und ein anschließendes Wandeln der Spannungen auf gleiche Höhe ermöglicht die konstante Erzeugung einer zuvor definierten Spannung.

Die optimale Verschaltung gleichstark bestrahlter Zellbereiche wird elektronisch gesteuert; die überproportional wirksamen Nachteile standortbedingter Verschattungen können so eleminiert werden.

Gemäß einer weiteren, bevorzugten Weiterbildung ist vorgesehen, daß die erfindungsgemäße Vorrichtung mit einer tageszeit- und/oder jahreszeitabhängigen Nachführung versehen ist. So wirkt sich besonders bevorzugt die tageszeitabhängige Nachführung in einer Bewegungsebene aus, welche dem Verlauf des Sonnenstandes über einen Tag entspricht, und entsprechend entspricht die jahreszeitabhängige Nachführung einer jeweiligen jahreszeitabhängigen Sonnenstandsposition.

Geeignet kann eine solche Vorrichtung zudem alternativ zu oder in Verbindung mit einer lichteinfallsgesteuerten Nachführung (d.h. einer Positionierung auf eine Richtung maximalen Sonnenlichteinfalls als Reaktion auf ein zusätzliches Sensorsignal oder aber ein Signal der Voltaikzellen) erfolgen. Insbesondere wenn nämlich durch Wolken od.dgl. ein lediglich diffuses Tageslicht vorhanden ist, würde so in jedem Fall eine tageszeitabhängige Nachführung eine nach wie vor optimale Positionierung ermöglichen.

Weitere Vorteile, Merkmale und Einzelheiten der Erfindungergeben sich aus der nachfolgenden Beschreibung bevorzugter Ausführungsbeispiele sowie anhand der Zeichnungen; diese zeigen in
- Fig. 1:: die Frontansicht einer Windkraftanlage;
- Fig. 2:: die Seitenansicht zu Fig. 1;
- Fig. 3:: ein Blockdiagramm zu einer elektrischen Verschaltung von Photovoltaikzellen der Anlage mit dem Versorgungsnetz;
- Fig. 4:: eine Frontansicht auf den Tragmast einer Windkraftanlage gemäß einer weiteren Ausführungsform, die eine Mehrzahl von separat schwenk- und bewegbaren Photovoltaik-Elementgruppen aufweist;
- Fig. 5:: eine schematische Seitenansicht eines Abschnittes des Tragmastes der Ausführungsform gemäß Fig. 4; und
- Fig. 6:: ein Blockschaltbild der Steuerelektronik zum Positionieren und Ausrichten der Photovoltaik-Elementgruppen in Abhängigkeit vom aktuellen Sonnenstand.

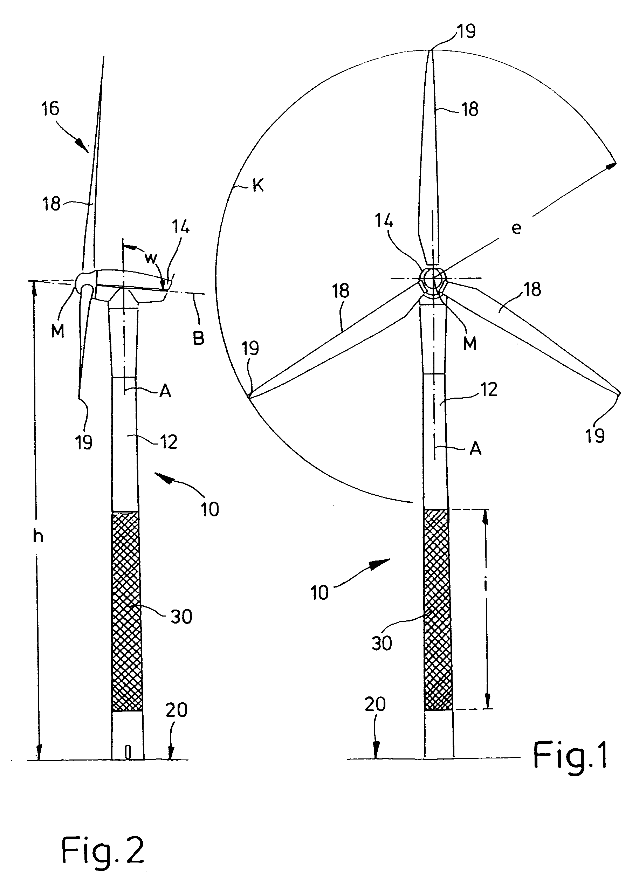

Eine Windkraftanlage 10 weist an einem vertikalen Tragmast 12 ein zu dessen Längsachse A in einem einstellbaren Achswinkel w von etwa 100° verlaufendes sowie drehbares Lagergehäuse 14 für einen -- in Fig. 1,2 nicht erkennbaren --Generator eines von Windkraft antreibbaren propellerartigen Rotors 16 mit drei Rotorblättern 18 auf. Der Abstand h des von der Gehäuseachse B durchdrungenen Rotormittelpunktes M zum Stellgrund 20 mißt etwa 60 m, der Radius e des Rotors 16 etwa 30 m.

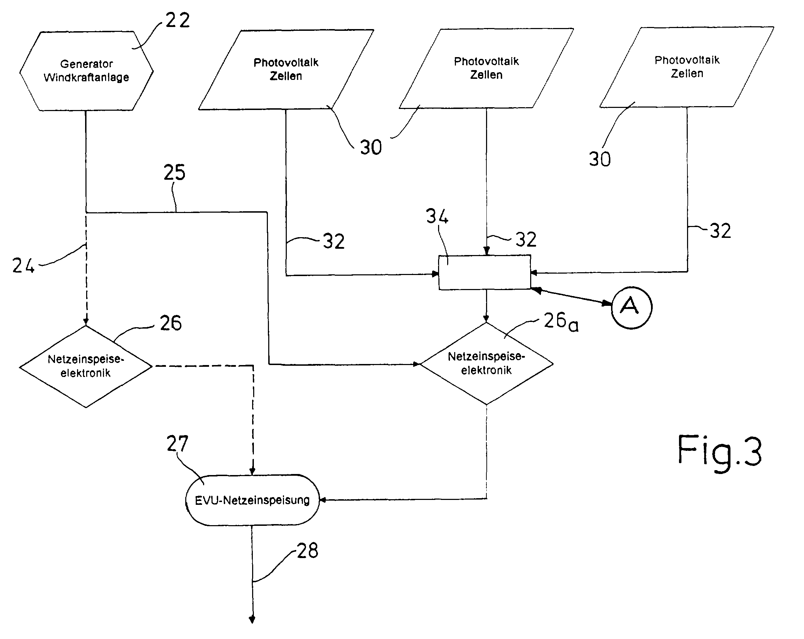

Von dem im Blockschaltbild der Fig. 3 mit 22 kenntlich gemachten Generator gehen Zuleitungen 24 zum Transport gewonnener Energie -- über eine Netzeinspeiseelektronik 26 und eine EVU-Netzeinspeisung 27 -- zu einer Stromleitung 28 eines Energieversorgungs-Unternehmens (EVU) aus.

Am Umfang des Tragmastes 12 sind in einem in der Zeichnung graphisch markierten Bereich der Höhe i photovoltaische Zellen 30 angebracht; dieser Bereich endet nach oben hin etwa an einem von den Rotorblattspitzen 19 beschriebenen Konstruktionskreis.

Die Photovoltaik- oder Solarzellen 30 sind über Anschlußleitungen 32 mit einer Wandlerelektronik 34 verbunden, die ihrerseits an eine Netzeinspeiseelektronik 26ₐ angeschlossen ist. In diesem Falle wird die beschriebene Zuleitung 24 des Generators 22 mit einer Zwischenleitung ebenfalls oder alternativ an die Netzeinspeiseelektronik 26ₐ angefügt; die Energieeinspeisung geschieht also durch die vorhandene Regelelektronik.

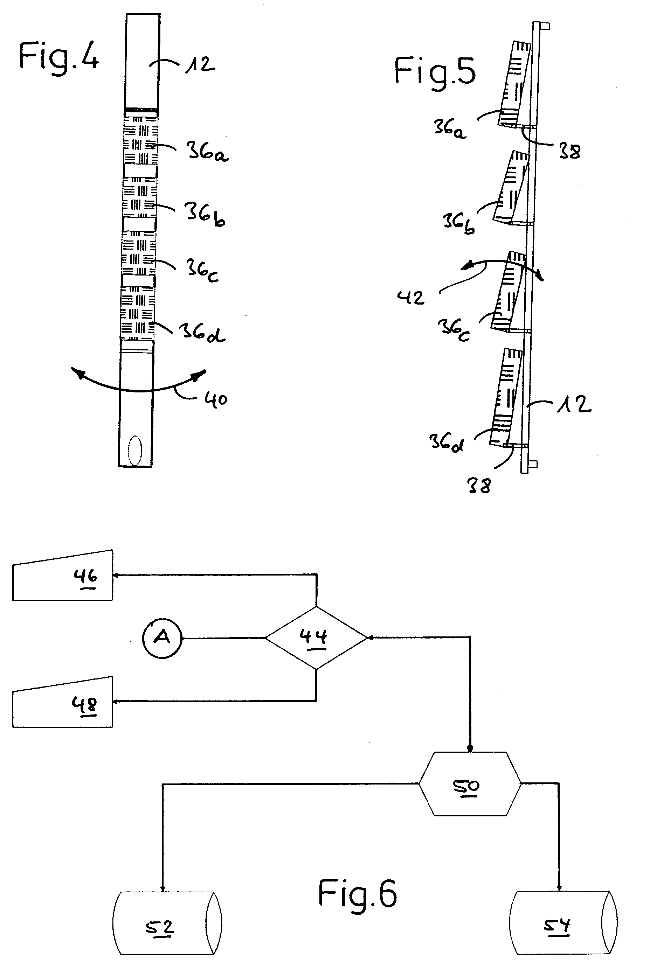

Die photovoltaischen Zellen 30 sind bevorzugt durch Zwischenelemente mit dem Tragmast 12 verbunden und an diesem -- einzeln oder in Gruppen -- zum Sonneneinfall hin einstellbar. Diese Einstellung wird durch Sensoren lichteinfallabhängig gesteuert, wie anhand der Fig. 4 bis 6 beschrieben wird.

Insbesondere eignet sich nämlich die in den Fig. 4 bis 6 gezeigte Ausführungsform dazu, den Wirkungsgrad der an der erfindungsgemäßen Windkraftanlage befestigten photovoltaischen Zellen weiter zu verbessern, und zwar dadurch, daß durch geeignetes Nachführen der einzelnen Zellen der Lichteinfallswinkel auf diese im Hinblick auf eine maximale Beleuchtungsstärke (und entsprechend auf maximale Stromanzeigung) optimiert wird.

Zu diesem Zweck weist die in den Fig. 4 und 5 gezeigte Anordnung eine an dem Tragmast 12 gehaltene Mehrzahl von Photovoltaik-Elementgruppen 36ₐ bis 36_{d} auf, die über geeignete Lagerungs- und Schwenkelemente 38 jeweils einzeln in ihrer Neigung bezogen auf die Vertikalrichtung des Tragmastes 12 geschwenkt werden können sowie in radialer Richtung um diese Vertikalachse drehbar sind. Geeignet weist der Tragmast 12 zu diesem Zweck eine -- in den Figuren nicht näher gezeigte -- Antriebsauflage mit einem Zahnkranz od. dgl. Antriebseinrichtung auf, die etwa durch einen oder mehrere Schrittmotoren die entsprechend gewünschte Positionseinstellung bewirken können.

Weiter vorteilhaft sind die jeweiligen Photovoltaik-Elementgruppen 36ₐ bis 36_{d} individuell ausricht- bzw. verstellbar, so daß lediglich kleine, preisgünstige mechanische Einheiten eingesetzt werden, die im Bedarfs- bzw. Wartungsfall problemlos ausgetauscht werden können und zudem nur geringen mechanischen Beanspruchungen unterliegen.

Insbesondere ist es erfindungsgemäß möglich, die Anordnung gemäß erstem Pfeil 40 in Fig. 4 um die Vertikalachse des Tragmastes 12 zu drehen, und die einzelnen Elementgruppen bzw. -module 36 sind jeweils in der durch den zweiten Pfeil 42 angedeuteten Weise bezogen auf die Vertikale schwenkbar.

Das Blockschaltbild in Fig. 6 verdeutlicht die elektronische Ansteuerung dieser erfindungsgemäßen, lichteinfallsabhängigen Positionsausrichtung der Photovoltaik-Elemente, wobei diese Elektronik in vorteilhafter Weise an die in Fig. 3 gezeigte Schaltung angekoppelt werden kann -- etwa zum Zweck der gemeinsamen Nutzung von Resourcen wie Stromversorgung, Prozessorsteuerung usw.. Diese mögliche Verbindung ist durch die Kennzeichnung A angedeutet.

Im einzelnen weist die Positionierelektronik in Fig. 6 zwei an eine Auswerteelektronik 44 angeschlossene Lichtsensoren 46,48 auf, wobei bevorzugt der erste Lichtsensor 46 für die Vertikalsteuerung vorgesehen ist und der zweite Lichtsensor 48 für die Horizontalsteuerung. Alternativ ist es möglich, die Photovoltaikzellen 30 selbst zu benutzen, um eine jeweilige Optimalposition des Lichteinfalls zu bestimmen, ohne separate Lichtsensoren 46,48 vorzusehen.

Ein Ausgangssignal der Auswerteelektronik 44 wird dann einer Positionier- bzw. Steuerelektronik 50 zugeleitet, mit welcher dann ein erster Schrittmotor 52 für eine horizontale Positionierung (im vorbeschriebenen Fall etwa die Schwenkbewegung gemäß Pfeil 40 in Fig. 4 um die Vertikalachse des Tragmastes 12) angesteuert bzw. angetrieben wird, sowie einen oder eine Mehrzahl von zweiten Schrittmotoren 54 für eine Vertikalbewegung, mit welchem bzw. welchen dann die jeweiligen Schwenkbewegungen in Pfeilrichtung 42 der Darstellung in Fig. 5 durchgeführt werden können.

Es versteht sich von selbst, daß durch geeignete Anordnung und Ausbildung der Photovoltaik-Elementgruppen auch lediglich ein einzelner Antriebsmotor für eine vertikale Schwenkbewegung benutzt werden könnte -- entweder über eine geeignete Getriebeanordnung, die eine Mehrzahl von Einzelgruppen gemeinsam antreibt, oder aber in einer Ausgestaltung, die lediglich eine einzelne Photovoltaikgruppe vorsieht (diesbezüglich ist aber rein geometrisch bedingt der mögliche Schwenkbereich begrenzt, so daß die Anordnung nicht beliebig weit einstellbar ist). Auch aus diesem Grunde ist daher das Vorsehen einer Mehrzahl von Photovoltaik-Elementgruppen vorteilhaft.

Auch ist erfindungsgemäß und in einer besonderen Weiterbildung vorgesehen, daß ab einer gewissen Beleuchtungsstärke (Luxstärke) die einzelnen Zellen bzw. Zellengruppen automatisch in eine vorbestimmte Ruheposition gefahren werden können.

Auch ist ein Betriebsmodus denkbar, bei welchem -- etwa durch stark diffuses Licht bei bedecktem Himmel, welches eine Positionseinstellung unnötig macht -- die automatische Nachsteuerung der Photovoltaik-Elementgruppen zur Energieeinsparung unterbleibt. Auch dieser Betriebsmodus kann durch entsprechende, geschickte Auswahl der Signale der Lichtsensoren 46,48 bzw. der eigentlichen Photovoltaikzellen festgestellt und gesteuert werden.

Auf die beschriebene Weise ist somit eine weitere Optimierung der erfindungsgemäßen Nutzung von Oberflächen eines Tragmastes einer Windkraftanlage möglich, dergestalt, daß die dort erfindungsgemäß vorgesehenen Photovoltaikzellen durch zusätzliche Antriebsmedien in eine für eine jeweilige Lichteinfallsposition optimale Stellung verbracht werden können, womit deren elektrischer Wirkungsgrad verbessert werden kann.

Eine weitere, bevorzugte Weiterbildung der Erfindung sieht vor, daß die vorstehend beschriebene, positionierbare Anordnung der Photovoltaikzellen mit einem Zeitmodul verbindbar ist, welches eine Positionierung von einzelnen Photovoltaikzellen (-gruppen) und/oder der Gesamtanordnung in Abhängigkeit von einer jeweiligen Tageszeit und/oder einer jeweiligen Jahreszeit vornehmen kann. Eine solche Anordnung kann ergänzend zu einer sensorgesteuerten, lichteinfallsabhängigen Positionierung erfolgen, oder aber alternativ zu dieser.

Insbesondere ermöglicht nämlich eine Ansteuerung bzw. Nachführung mittels des Zeitmoduls ein Verfolgen des Sonnenstandes und somit der Richtung maximaler Lichteinfallsintensität auf die wirksame Oberfläche der Photovoltaikzellen unabhängig von einer speziellen Lichtmessung. Vielmehr gestattet es das Zeitmodul, das Nachführen möglichst genau entlang dem Verlauf des Sonnenstandes und in der jeweiligen Verlaufsebene durchzuführen, wobei besonders bevorzugt auch der Jahreszeit- und Breitengrad-abhängige Lichteinfallswinkel der Sonne berücksichtigt werden kann.

Hierbei bietet es sich insbesondere auch an, das Zeitmodul mit einer Speichereinrichtung zu versehen, welche im Hinblick auf einen vorbestimmten Normort, etwa Kassel, alle Sonnenauf- und Untergänge eines Jahres gespeichert hat, so daß es dadurch möglich wird, den täglichen Sonnenauf- und Untergang zu bestimmen. Darüber hinaus wäre es dann durch zusätzliche Berücksichtigung der Breitengrade bzw. der Breitengradabweichung gegenüber diesem Normort möglich, die Zeitsteuerung dann auf die jeweils lokalen Bedingungen anzupassen und einzustellen. Somit wird die Vorrichtung weltweit einsetzbar.

Darüber hinaus ist es möglich, das Zeitmodul zusätzlich mit einer einstellbaren bzw. vorwählbaren Zeitfunktion zu versehen, welche über vorwählbare, speicherbare bzw. frei definierbare Einschalt- und Ausschaltzeiten verfügt, so daß nach jeweils individuellen Anforderungen ein Betrieb bzw. ein Nachführen erfolgen kann.

Weiter bevorzugt bietet es sich darüber hinaus an, das Zeitmodul mit einem Empfänger zum drahtlosen Erfassen eines Funkzeitsignals zu verbinden, so daß stets eine maximale Genauigkeit der Zeitnachführung erreichbar ist und manuelle Verstellungen und Anpassungen einer Uhrzeit unnötig werden; darüber hinaus ist drahtlos sogar eine Datums- (= Jahreszeit-) Information erhältlich.

Konkret würde dann etwa durch eine solche zeitabhängige Steuerung ein Nachführen zu einem konstanten, jeweils individuell vorbestimmten oder tageweise veränderlichen Zeitpunkt erfolgen, wobei besonders bevorzugt die zum Nachführen bzw. Verstellen der Voltaikanordnung verwendeten Motoren über eine geeignete Steuerelektronik in Zeitintervallen -- die gesondert eingestellt werden können -- angesteuert werden. Als Reaktion auf ein gesondertes Stoppsignal, etwa am Ende eines Tages, würde dann ein Zurückführen der Anordnung in eine Ausgangsposition erfolgen.

In entsprechender Weise könnte eine (Vertikal- bzw. Höhen-) Verstellung zur Berücksichtigung des jahreszeitabhängigen Sonnenstandes erfolgen. Auch ist durch geeignete Positionssensoren an den jeweiligen Motoren bzw. durch geeignete, elektronische Positionserfassung eine Regelung und Feineinstellung der jeweils vorgegebenen Position möglich.

Auch bietet es sich an, im Bedarfsfall die vorbeschriebene, zeitabhängige Nachführung in geeigneter Weise mit der konkreten Lichteinfallsmessung zu kombinieren. So kann dann in Abhängigkeit von den jeweiligen Lichtbedingungen eines Standorts eine Optimierung hinsichtlich der Positionierung der Voltaikzellen erfolgen, so daß die maximale Energieausbeute erreicht wird. Da in vorteilhafter Weise die Voltaikzellen am Traggestell der Windkraftanlage befestigt sind, ist ein Gesamtsystem realisiert, welches keine zusätzlichen, aufwendigen Trägereinrichtungen für eine Voltaikzellenanordnung benötigt, so daß insgesamt das System sich durch hohe Effizienz bei optimierter Energieerzeugung und Raumausnutzung auszeichnet.

## Patentansprüche

1. Windkraftanlage mit einem Tragmast (12) für einen mit einem Generator treibend verbundenen Rotor (16) und von dem Generator ausgehenden Zuleitungen zu einer Netzeinspeisung (27),
dadurch gekennzeichnet,
daß an den Tragmast (12) mit der Netzeinspeisung (27) verbundene photovoltaische Elemente oder Solarmodule (30) oder Gruppen von Solarmodulen angefügt sind, die mittels einer motorisch betriebenen Positioniervorrichtung (44 bis 54) als Reaktion auf eine Intensität einfallenden Sonnenlichts in eine Richtung maximalen Lichteinfalls ausrichtbar ausgebildet sind.

2. Windkraftanlage nach Anspruch 1, dadurch gekennzeichnet, daß die photovoltaischen Elemente oder Solarmodule (30) gegenüber dem Tragmast (12) vertikal schwenkbar und/oder um seine Längsachse (A) drehbar gelagert und in dieser Weise durch die Positioniervorrichtung ausrichtbar sind.

3. Windkraftanlage nach Anspruch 2, dadurch gekennzeichnet, daß die photovoltaischen Elemente mittels einer mindestens einen Schrittmotor (52,54) sowie einen Zahnkranz aufweisenden Antriebseinrichtung ausrichtbar ausgebildet sind.

4. Windkraftanlage nach einem der Ansprüche 1 bis 3, dadurch gekennzeichnet, daß die photovoltaischen Elemente oder Solarmodule (30) durch Zwischenelemente (38) mit dem Tragmast (12) verbunden sowie einzeln oder in Gruppen (36ₐ bis 36_{d}) verstellbar sind.

5. Windkraftanlage nach einem der Ansprüche 1 bis 4, dadurch gekennzeichnet, daß zum Verstellen der photovoltaischen Elemente oder Solarmodule (30) gegenüber dem Tragmast (12) lichteinfallabhängige Sensoren (46,48) als Steuerelemente für die Positioniervorrichtung vorgesehen sind.

6. Windkraftanlage nach einem der Ansprüche 1 bis 5, dadurch gekennzeichnet, daß die photovoltaischen Elemente oder Solarmodule in eine Ruhestellung positionierbar sind, und eine mit der Positioniervorrichtung verbundene Steuereinheit als Reaktion auf das Übersteigen eines vorbestimmten Schwellwertes durch die Intensität des einfallenden Sonnenlichts zum Verbringen der photovoltaischen Elemente oder Solarmodule in die Ruhestellung eingerichtet ist.

7. Windkraftanlage mit einem Tragmast (12) für einen mit einem Generator treibend verbundenen Rotor (16) und von dem Generator ausgehenden Zuleitungen zu einer Netzeinspeisung (27), dadurch gekennzeichnet, daß an den Tragmast (12) mit der Energieeinspeisung (27) verbundene photovoltaische Elemente oder Solarmodule (30) oder Gruppen von Solarmodulen angefügt sind, die mittels einer motorisch betriebenen Positioniervorrichtung (44 bis 54) als Reaktion auf ein Zeitsignal in eine Lichteinfallsrichtung auf die photovoltaischen Elemente oder Solarmodule ausrichtbar ausgebildet sind.

8. Windkraftanlage nach einem der Ansprüche 1 bis 7, dadurch gekennzeichnet, daß die Positioniervorrichtung mit einem Zeitmodul verbunden ist, welche das Zeitsignal tageszeit- und/oder jahreszeitabhängig erzeugt oder drahtlos mittels einer Empfangseinrichtung empfängt.

9. Windkraftanlage nach Anspruch 8, dadurch gekennzeichnet, daß das Zeitmodul mit Mitteln zum Berücksichtigen eines Positions- bzw. Breitengradwerts versehen ist, welche eine auf den Breitengrad gegenüber einer Normposition bezogene Anpassung der Ausrichtung vornehmen.

10. Windkraftanlage nach Anspruch 8 oder 9, dadurch gekennzeichnet, daß das Zeitmodul Mittel zum Vorgehen von Aktivierungs- und/oder Deaktivierungszeiten für eine Ausrichtung aufweisen.
